# EUROPEAN PATENT APPLICATION

(11) **EP 0 819 492 A1**
(43) Date of publication of application: **21.01.1998**
(21) Application number: 96900452.2
(22) Date of filing: 16.01.1996
(51) Int. Cl.: B23G 5/06

(54) **SCREW TAP AND FEMALE SCREW FORMING METHOD**

(71) Applicant: Daishowa Seiki Co., Ltd., Higashiosaka-shi, Osaka 579 (JP)
(72) Inventor: UEDA, Kazuo, Daishowa Seiki Co., Ltd., Higashiosaka-shi, Osaka 579 (JP)
(74) Representative: Füchsle, Klaus, Dipl.-Ing.
(86) International application number: JP9600057
(87) International publication number: WO9726106

(57) **Abstract**

Disclosed are a tap for forming an internal thread in a material to be tapped and a tapping method. The tap 1 has teeth 3 and grooves 4 between them. The bottoms of the grooves 4 contact with the top 22a of the internal thread 22 with substantially no space between them. The tap can form an internal thread without burrs on both corners of the thread top surface.

## Description

### TECHNICAL FIELD

The present invention relates to a screwtap for tapping metallic material or the like, and to a method of tapping with the screwtap.

### BACKGROUND ART

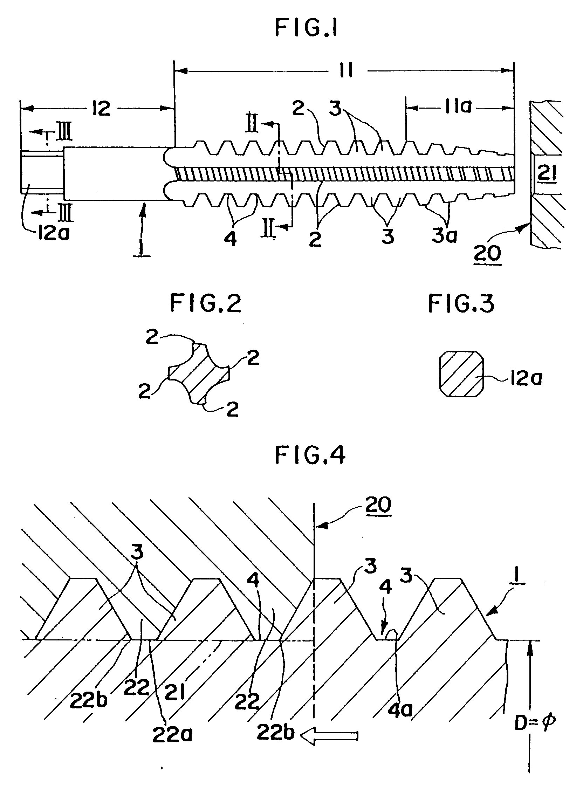

In general, as shown in Figs.1 and 2, a tap 1 includes a screw part 11 having four axial lands 2, which are nearly cruciform in cross section. As shown in Figs.1 and 3, the tap 1 also includes a shank 12 having a square end shaft 12a. Each 1and 2 has teeth 3 formed in it at regular intervals. Each tooth 3 is trapezoidal in side view. The screw part 11 has a leading part 11a, which is tapered with the tops 3a of the teeth 3 lowering gradually forward.

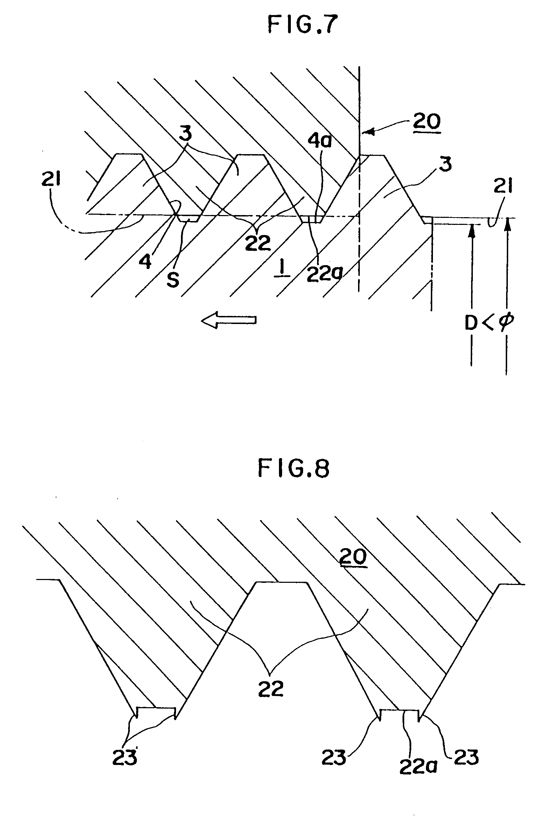

A material 20 can be tapped by preparing a hole 21 in it, and then screwing the screw part 11 of the tap 1 into the prepared hole 21, so that the teeth 3 spirally cut the cylindrical surface of the hole 21. Conventionally, the grooves 4 between the teeth 3 of the tap 1 are inverted trapezoids in side view. As shown in Fig.7, the tap 1 has a preset minor or root diameter D smaller than the diameter Φ of the prepared hole 21 in the material 20. By way of example, for tapping for a metric coarse internal thread of JIS (Japanese Industrial Standard) M24P3, the prepared hole 21 has a preset diameter Φ of approximately 21.2 - 21.3 mm, a little larger than the nominal diameter which is 21 (24 minus 3) mm, in consideration of the absorption of strain due to heat treatment such as the quenching after tapping. A tap 1 appropriate for this has a minor diameter D of 20.5 mm in general.

Because the minor diameter D of the conventional tap 1 is smaller than the diameter Φ of the prepared hole 21 in the material 20, as stated above, the internal thread 22 of the tapped material 20 has a top surface 22a formed in the cylindrical surface of the hole 21. During the tapping , spaces S are formed between the bottom surfaces 4a of the grooves 4 and the cylindrical surface of the prepared hole 21. Side part of the thread 22 under cutting pressure escapes or moves into the spaces S due to the spreading nature of metal. Therefore, as shown in Fig.8, the thread 22 has burrs 23 sharply projecting on both sides of the top surface 22a.

It is difficult or impossible to screw a male screw (a bolt, a machine screw or the like) into a female screw having burrs 23, because the burrs contacting with the male screw resist so largely. Conventionally, the burrs 23 are removed by finishing with a carbide drill or a finishing tap after the tapping. As a result, the tapping efficiency is low.

In view of the situation mentioned above, it is the object of the present invention to provide a tap and a tapping method for very efficient tapping without burrs produced on both sides of the top of the internal thread when the tap is screwed into a hole prepared in a material to be tapped, thereby omitting the finishing with a carbide drill or a finishing tap, which is essential after the conventional tapping.

### DISCLOSURE OF THE INVENTION

For the above object, a tap 1 according to the present invention has teeth 3 and grooves 4 between them the bottoms of which contact closely with, or are spaced little from, the top 22a of the internal thread 22 formed in the tapped material 20. When the tap 1 is screwed into the hole 21 prepared in the material 20 being tapped, side part of the internal thread 22 of the material 20 under cutting pressure tends to escape in the directions of extension from both sides of the thread 22 due to the spreading nature of metal. However, there are no spaces for the escape between the top 22a of the internal thread 22 and the bottoms of the grooves 4 in the tap 1, so that no burr is produced on both sides of the top surface 22a as was the case conventionally.

Another tap 1 according to the invention has a minor diameter D which is equal or nearly equal to the diameter Φ of the prepared hole in the material 20 to be tapped. When the tap 1 is screwed into the prepared hole 21 to form an internal thread 22, the bottoms of the grooves 4 between the teeth 3 wholly contact closely with the top 22a of the thread 22, or there is little space between the grooves 4 and top 22a, so that no space is formed for production of burrs.

Still another tap 1 according to the invention has a groove shape with round corners 40 for contact with both top corners 22b of an internal thread 22 formed in a tapped material 20. Therefore, yet, no spaces are formed for burrs to be produced between the grooves 4 and the thread top corners 22b. Naturally, the thread top corners 22b are roundly chamfered.

A tapping method according to the invention is characterised by the steps of preparing a hole 21 in a material 20 to be tapped, and screwing any one of the above taps 1 into the prepared hole 21 to tap the material. Therefore, during the tapping, no gaps are formed between both top corners 22b of the internal thread 22, which is formed in the material 20, and the grooves 4 of the tap 1. Consequently, it is possible to securely form an internal thread 22 without burrs on both sides of the thread top surface 22a.

### BRIEF DESCRIPTION OF THE DRAWINGS

Fig.1 is a side view of a general tap.

Fig.2 is a cross section taken along line II - II of Fig.1.

Fig.3 is a cross section taken along line III - III of Fig.1.

Fig.4 is a cross section of main parts, showing tapping with a tap according to the first embodiment of the present invention.

Fig.5 is a cross section of main parts, showing tapping with a tap according to the second embodiment of the invention.

Fig.6 is an enlarged cross section of the parts shown in Fig.5.

Fig.7 is a cross section of main parts, showing tapping with a conventional tap.

Fig.8 is an enlarged cross section of an internal thread formed by conventional tapping.

### BEST MODES EMBODYING THE INVENTION

Fig.4 shows tapping with a tap 1 according to the first embodiment of the present invention. The contour of the tap 1 is similar to that of the general tap shown in Figs.1 - 3. The tap 1 has teeth 3 and grooves 4 between them, which are inverted trapezoids in cross section. The tap 1, however, has a preset minor diameter D which is equal to the diameter Φ of a prepared hole 21 in a material 20 to be tapped. By way of example, for tapping for a metric coarse internal thread of JIS M24P3, the prepared hole 21 in the material 20 to be tapped has a diameter Φ which is approximaterly 21.2 - 21.3 mm, a little langer than the nominal diameter which is 21 (24 minus 3)mm. The minor diameter D of the tap 1 is equal to the diameter Φ of the prepared hole 21 within a range approximately between 21.2 and 21.3 mm.

When the tap 1 of this embodiment is screwed into the prepared hole 21 in the material 20 to be tapped, the teeth 3 cut the cylindrical surface of the hole 21 to form an internal thread 22. The bottom surfaces 4a of the grooves 4 in the tap 1 are kept in close contact with the cylindrical surface of the prepared hole 21, without spaces formed between the top surface 22a of the internal thread 22 and the bottom surfaces 4a of the grooves 4. Side part of the internal thread 22 of the material 20 under cutting pressure tends to escape in the directions of extension from both sides of the thread 22 due to the spreading nature of metal. Because there is no space for the escape, however, no burrs are produced on both sides of the top surface 22a of the internal thread 22.

As stated above, it is preferable that the diameter Φ of the prepared hole 21 in the material 20 to be tapped equal the minor diameter D of the tap 1. Practically, however, in consideration of manufacturing errors, the diameters may not be necessarily exactly equal. By way of example, as stated above, there are manufacturing errors in a range between 21.2 and 21.3 mm in the diameter Φ of the errors in a range between 21.2 and 21.3 mm in the diameter Φ of the prepared hole 21 and the minor diameter D of the tap 1. If the diameter Φ is 21.3 mm and the diameter D is 21.2 mm, a slight gap of 0.1 mm is formed between the material 20 and tap 1. Side part of the internal thread 22 under cutting pressure tends to escape in the directions of extension from both sides of the thread 22 due to the spreading nature of metal. However, a gap to that extent, specifically of about 0.1 - 0.2 mm, does not constitute a space for the escape. Therefore, no burrs are produced on both sides of the top surface 22a of the internal thread 22. In the present invention, the little space between the top surface 22a of the internal thread 22, which is formed in the tapped material 20, and the bottoms of the grooves 4 between the teeth 3 means a slight gap of about 0.1 - 0.2 mm.

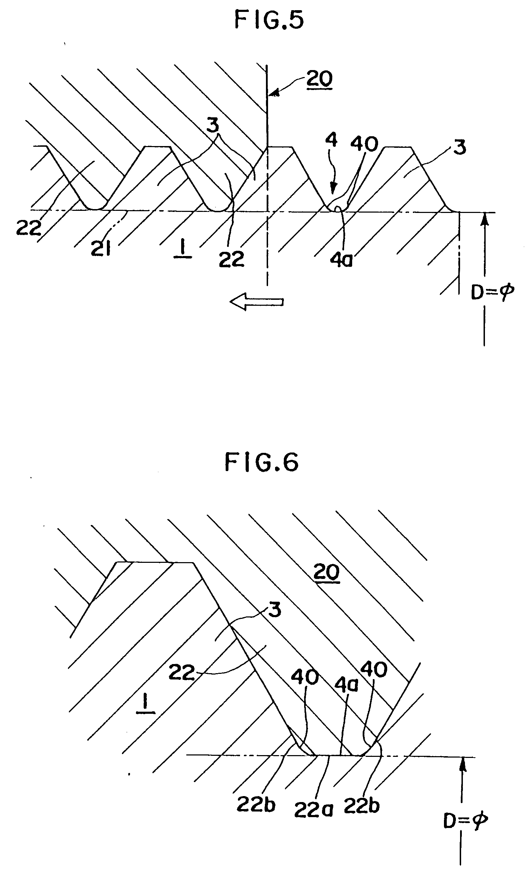

Figs.5 and 6 show tapping with a tap 1 according to the second embodiment of the invention. The tap 1 is similar to the general tap shown in Fig.1, except that both corners of its each groove 4 are concavely circular or arcuate in cross section.

When the tap 1 of this embodiment is screwed into a hole 21 prepared in a material 20 to be tapped, the teeth 3 cut the cylindrical surface of the hole 21 to form an internal thread 22, similarly to the first embodiment. The round corners 40 of the bottoms 4a of the grooves 4 make a cut to roundly chamfer the top corners 22b of the internal thread 22. As shown in Fig. 3, the top 22a of the internal thread 22. As shown in Fig.3, the top 22a of the internal thread 22, inclusive of the corners 22b, may be wholly round. Alternatively, as shown in Fig.4, the thread top 22a may be linear, and the corners 22b may be chamfered roundly.

In this embodiment as well, side part of the internal thread 22 of the material 20 under cutting pressure tends to escape in the directions of extension from both sides of the thread 22 due to the spreading nature of metal. However, there is no space for the escape between the top corners 22b of the internal thread 22 and the round corners 40 of the grooves 4. Therefore, no burrs are produced on both sides of the thread top surface 22a.

According to either of the embodiments, it is possible to form an internal thread 22 of high quality without burrs on both sides of the thread top 22a. It is therefore possible to omit the finishing with a carbide drill or a finishing tap after tapping such as the conventional tapping. This enables the tapping efficiency to be very high. Of course, finishes for other purpose than burr removal may be made as occasion demands after tapping according to the present invention.

Particularly in the second embodiment, the top corners 22b of the internal thread 22 are rounded. As a result, a male screw such as a bolt and a machine screw can easily and smoothly engage with the thread 22.

The present invention can also be applied to other taps for automatic processing and manual operation, than shown in Figs. 1 - 3. In general, the internal threads of the materials tapped by the taps of the invention are metric coarse threads. The invention may, however, be applied to other threads as well.

### INDUSTRIAL APPLICABILITY

As apparent from the above description, the taps and tapping method according to the present invention make it possible to securely method according to the present invention make it possible to securely form an internal thread without burrs on both sides of the thread top surface. It is therefore possible to omit the finishing with a carbide drill or a finishing tap, which is essential for removal of burrs after the conventional tapping. This enables the tapping efficiency to be very high.

In addition to the possibility of forming an internal thread without burrs, the grooves between the teeth of the taps can take the form of a simple inverted and truncated cone in cross section. It is therefore possible to produce the taps easily and cheaply.

The taps can each form an internal thread without burrs and with roundly chamfered top corners on both sides. Therefore, a male screw such as a bolt and a machine screw can easily and smoothly engage with the internal thread.

## Claims

1. A tap for forming an internal thread in a material to be tapped, said tap comprising teeth and grooves between said teeth, the bottoms of said grooves contacting closely with, or being spaced little from, the top of said thread.

2. A tap according to Claim 1, and having a minor diameter which is equal or nearly equal to the diameter of a hole prepared in said material.

3. A tap according to Claim 1 or 2, and having a round groove bottom shape for contact with both corners of the top of said internal thread.

4. A tapping method characterised by the steps of preparing a hole in a material to be tapped, and screwing into said hole a tap according to any one of Claims 1 - 3.
